## Europäisches Patentamt
## European Patent Office
## Office européen des brevets

(19)

(11) Veröffentlichungsnummer : **0 433 231 B1**

(12)

# EUROPÄISCHE PATENTSCHRIFT

(45) Veröffentlichungstag der Patentschrift :
**10.11.93 Patentblatt 93/45**

(51) Int. Cl.$^5$ : **B65G 43/08**

(21) Anmeldenummer : **90810946.5**

(22) Anmeldetag : **04.12.90**

(54) **Vorrichtung zur Bildung einer Kolonne von Stückgütern, insbesondere von Schokoladeriegeln.**

(30) Priorität : **08.12.89 CH 4423/89**

(43) Veröffentlichungstag der Anmeldung :
**19.06.91 Patentblatt 91/25**

(45) Bekanntmachung des Hinweises auf die
Patenterteilung :
**10.11.93 Patentblatt 93/45**

(84) Benannte Vertragsstaaten :
**CH DE ES FR GB IT LI NL**

(56) Entgegenhaltungen :
**DE-A- 1 456 521**
**DE-A- 3 147 590**
**DE-A- 3 630 791**
**DE-U- 7 826 035**

(73) Patentinhaber : **SIG Schweizerische**
**Industrie-Gesellschaft**
**CH-8212 Neuhausen am Rheinfall (CH)**

(72) Erfinder : **Lenherr, Harald**
**Gärtliweg 13**
**CH-8222 Beringen (CH)**

(74) Vertreter : **Münch, Otto et al**
**Isler & Pedrazzini AG, Patentanwälte,**
**Postfach 6940**
**CH-8023 Zürich (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Eine Vorrichtung zur Bildung einer Kolonne von Stückgütern ist aus der DE-A-27 11 039 bekannt. Diese Schrift zeigt ein umlaufendes Zufuhrband und ein umlaufendes Abfuhrband, die je am Ende der Transportstrecke über ortsfest gelagerte Umlenkrollen geführt sind. An der Uebergabestelle zwischen den beiden Bändern sind diese über Umlenkrollen geführt, welche auf einem in Transportrichtung hin- und herbewegbaren Schlitten gelagert sind. Der Schlitten trägt ferner im Abstand von diesen ersten Umlenkrollen angeordnete zweite Umlenkrollen. Der Schlitten wird durch eine konstant drehende Kurvenscheibe hin und her bewegt. Damit werden aus in regelmässigen Abständen auf dem Zufuhrband angelieferten Schokoladeriegeln auf dem Abfuhrband Gruppen dieser Riegel gebildet, die dann einer Verpackungsmaschine zugeführt werden. Weil die beweglichen zweiten Umlenkrollen einen relativ grossen Abstand voneinander haben müssen, der in der Grössenordnung der Hälfte der Gesamtförderstrecke liegt, ist der maximale Schlittenhub relativ gering.

In der DE-A-36 30 791 ist eine Vorrichtung beschrieben, mit welcher aus einer Reihe von Gegenständen mit unregelmässigem Abstand eine regelmässig formierte Reihe gebildet werden kann. Diese Vorrichtung erfordert allerdings mindestens drei Förderbänder mit mindestens zwei in Transportrichtung hin und her verschiebbaren Uebergängen, sowie ein taktweises An- und Abschalten der drei Bänder. Die Steuerung ist dadurch kompliziert und aufwendig, und wegen des An- und Abschaltens ist die Transportleistung relativ bescheiden.

In der DE-A-1 456 521 ist eine weitere Vorrichtung beschrieben. Auf einem Zufuhrförderband werden Gegenstände in unregelmässigen Abständen angeliefert und an einer auf einem Schlitten befindlichen Uebergabestelle auf ein Abfuhrförderband übergeben. Zur Bildung von Gruppen von regelmässig beabstandeten Gegenständen wird das Abfuhrförderband stillgesetzt. Jedesmal, wenn ein Gegenstand die Uebergabestelle passiert, wird der Schlitten um einen bestimmten Betrag entgegen der Förderrichtung des Zufuhrbandes verschoben. Wenn eine vorbestimmte Anzahl Gegenstände auf dem Abfuhrband akkumuliert ist, wird diese Gruppe durch Einschalten des Abfuhrbandes in einem Zuge ausgetragen und der Schlitten anschliessend wieder in seine Anfangsstellung verschoben. Auch diese Vorrichtung arbeitet wegen des taktweisen Betriebs relativ langsam. Sie ist nur zur Bildung relativ kurzer Gruppen von Gegenständen geeignet.

Der vorliegenden Erfindung liegt die Aufgabe zugrunde, eine Vorrichtung der eingangs genannten Art nach der DE-A-1 456 521 derart weiterzubilden, dass mit hoher Transportleistung aus kontinuierlich in unregelmässigen Abständen angelieferten Gegenständen eine kontinuierliche Reihe mit konstanten Abständen gebildet werden kann. Diese Aufgabe wird durch die Merkmalskombination des Anspruchs 1 gelöst.

Nachfolgend wird ein Ausführungsbeispiel der Erfindung anhand der Zeichnungen erläutert. Darin zeigt:

Fig. 1    eine schematische Seitenansicht einer erfindungsgemässen Vorrichtung,
Fig. 2    einen Querschnitt längs der Linie II - II in Fig. 1,
Fig. 3    ein Prinzipschema der Wirkungsweise der Vorrichtung nach Fig. 1,
Fig. 4    eine zweite Ausführungsform, und
Fig. 5    ein Schema eines Reglers.

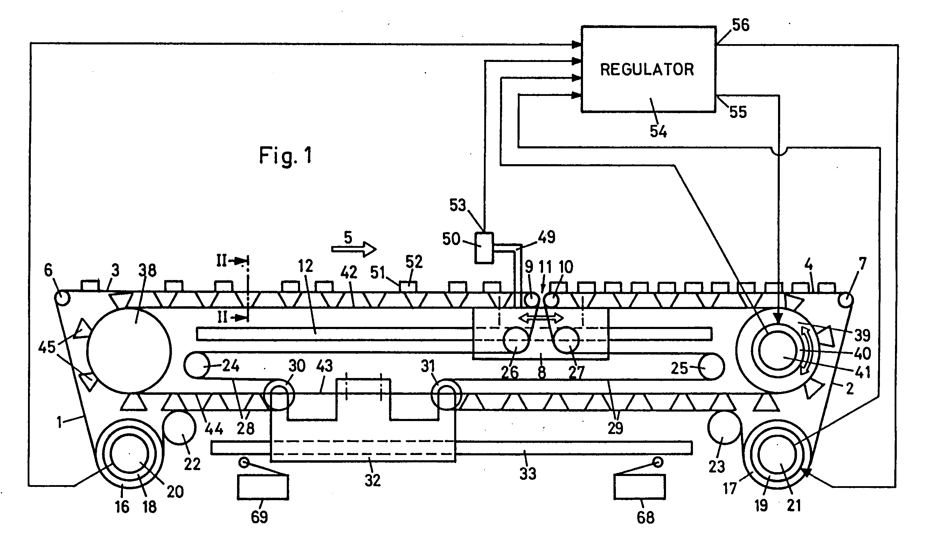

Die Vorrichtung nach Fig. 1 ist zwischen eine nicht dargestellte Produktionsmaschine, in der z.B. Schokoladeriegel hergestellt werden, und eine ebenfalls nicht dargestellte Verpackungsmaschine geschaltet. Sie umfasst ein endloses, umlaufendes Zufuhrband 1 und ein daran anschliessendes, endloses, umlaufendes Abfuhrband 2. Die oberen, horizontalen Trums 3, 4 dieser Bänder 1, 2 laufen in Transportrichtung 5 und sind begrenzt durch je eine ortsfest gelagerte Umlenkrolle 6, 7 am stromaufwärtigen bzw. stromabwärtigen Ende der Vorrichtung und zwei unmittelbar nebeneinander an einem Schlitten 8 drehbar gelagerte Umlenkrollen 9, 10. Der Zwischenraum zwischen den Rollen 9, 10 bildet die Uebergabestelle 11 zwischen den Bändern 1, 2. Der Schlitten 8 ist auf einer Schiene 12 in Transportrichtung 5 hin- und herverschiebbar geführt. Die Bänder 1, 2 umschlingen je eine Antriebsrolle 16, 17, die durch je einen Motor 18, 19 angetrieben sind. Die Abtiebswellen der beiden Motoren 18, 19 treiben je einen Tachometer 20, 21. Die Bänder 1, 2 sind ausserdem um je zwei weitere, ortsfest gelagerte Umlenkrollen 22, 24 bzw. 23, 25 und je eine am Schlitten 8 gelagerte Rolle 26, 27 geführt. Zwischen den Rollen 22, 24 bzw. 23, 25 bilden die Bänder 1, 2 je eine Schlaufe 28, 29. Die Schlaufen 28, 29 werden durch je eine Umlenkrolle 30, 31 gespannt. Die Umlenkrollen 30, 31 sind auf einem zweiten, unteren Schlitten 32 drehbar gelagert, der auf einer zweiten Schiene 33 in Transportrichtung 5 hin und her verschiebbar ist.

Benachbart den Rollen 6, 7 sind unterhalb der oberen Trums 3, 4 der Bänder 1, 2 zwei Zahnscheiben 38, 39 ortsfest drehbar gelagert. Die Scheibe 39 ist mit der Abtriebswelle eines in beiden Drehrichtungen antreibbaren Servomotors 40 sowie einem weiteren Tachometer 41 verbunden. Der Schlitten 8 ist am oberen Trum 42, der Schlitten 32 am unteren Trum 43 eines über die beiden Scheiben 38, 39 gespannten endlosen Zahnriemens 44 befestigt. Auf der den Zähnen abgewandten Aussenseite des Zahnriemens 44 sind an diesem in regelmässigen Abständen Stützkörper 45 aus Polyamid befestigt. Auf diesen Stützkörpern 45 gleiten die oberen Trums 3, 4 der Bänder 1, 2. Damit kann eine Vertikalschwingung dieser Bänder auch bei abrupten Beschleunigungen des Schlittens 8 verhindert werden.

Mittels eines Trägers 49 ist auf dem Schlitten 8 eine Lichtschranke 50 befestigt, die jeweils beim Durchlauf der Hinterkante 51 eines auf dem oberen Trum 3 des Zufuhrbandes 1 durchlaufenden Schokoladeriegels 52 an ihrem Ausgang 53 ein Signal abgibt. Der Ausgang 53 ist mit einem der Eingänge eines Reglers 54 verbunden. Die übrigen Eingänge des Reglers 54 sind an die Ausgänge der drei Tachometer 20, 21, 41 angeschlossen. Ein Ausgang 55 des Reglers 54 regelt die Drehzahl und Drehrichtung des Servomotors 40. Ein zweiter Ausgang 56 des Reglers 54 steuert die Drehzahl eines der Motoren 18, 19, im dargestellten Ausführungsbeispiel des Motors 19.

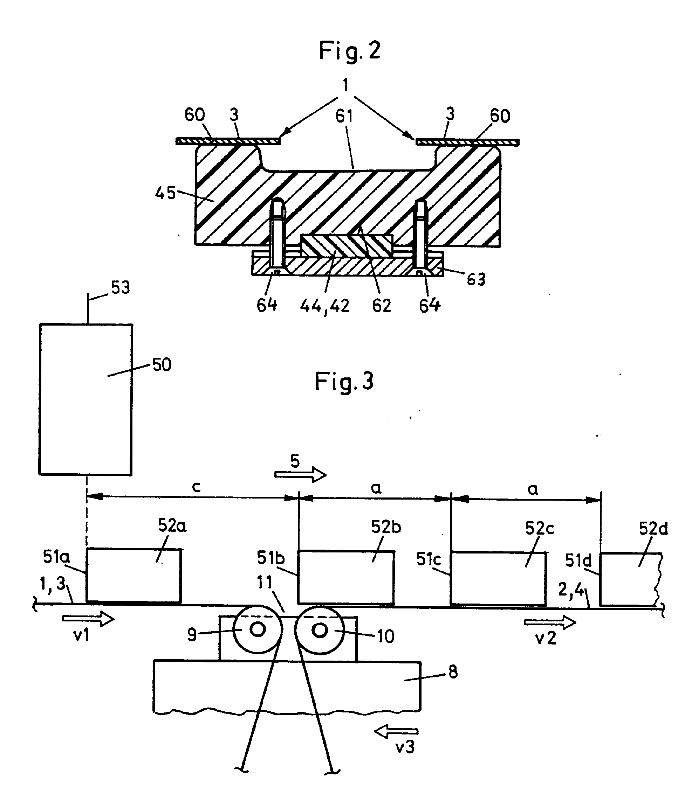

In Fig. 2 ist ein Querschnitt durch den Zahnriemen 44 und das Band 1 dargestellt. Das Zufuhrband 1 wie auch das Abfuhrband 2 besteht aus zwei parallel im Abstand voneinander angeordneten Transportbändern 60, welche auf den Stützkörpern 45 gleiten. Dies hat den Zweck, dass die Schokoladeriegel zwei definierte Auflagestellen haben und nicht z.B. bei unregelmässiger Riegelform bloss in der Mitte aufliegen und daher leicht verdrehen können. Dem gleichen Zweck dient eine Ausnehmung 61 an der Oberseite der Stützkörper 45. Die Stützkörper 45 haben an ihrer Unterseite eine Nut 62, in welcher der Zahnriemen 44 positioniert ist. Mittels einer Platte 63, welche in die Verzahnung des Riemens 44 eingreift und zweier Schrauben 64 ist der Stützkörper 45 am Riemen 44 befestigt.

Eine der möglichen Betriebsweisen der beschriebenen Vorrichtung wird nachfolgend anhand der Fig. 3 beschrieben: Das Zufuhrband 1 wird mittels des Motors 16 mit einer konstanten Geschwindigkeit $v_1$ angetrieben. Im dargestellten Ausführungsbeispiel wird das Abfuhrband 2 mit einer geringeren Geschwindigkeit $v_2$ durch den Motor 17 angetrieben. Die Hinterkanten $51_b$, $51_c$, $51_d$ der auf dem Abfuhrband 2 transportierten Schokoladeriegel $52_b$, $52_c$, $52_d$ haben voneinander einen konstanten Abstand a. In der dargestellten Ausgangslage ist die Hinterkante $51_b$ des hintersten dieser Riegel $52_b$ an der Uebergabestelle 11. Bevor die Lichtschranke 50 die Hinterkante $51_a$ des nächsten auf dem Zufuhrband 1 angelieferten Riegels $52_a$ signalisiert, läuft der Schlitten 8 mit der Geschwindigkeit $v_2$ nach rechts, so dass die Hinterkante $51_b$ relativ zum Schlitten 8 stationär bleibt. Sobald am Ausgang 53 der Lichtschranke 50 der Durchlauf der Hinterkante $51_a$ des nächsten Riegels $52_a$ signalisiert wird, steuert der Regler 54 den Servomotor 40 um, so dass der Schlitten 8 nun mit einer Geschwindigkeit $v_3$ z.B. nach links läuft. Es lässt sich zeigen, dass diese Geschwindigkeit nach der Gleichung

$$v_3 = \frac{V_2 \cdot c - v_1 \cdot a}{c - a}$$

zu berechnen ist, wobei c der Abstand zwischen Lichtschranke 50 und Uebergabestelle 11 ist. Zur Regelung der Schlittengeschwindigkeit $v_3$ werden deshalb die Messsignale der Tachometer 20, 21 herangezogen. Das Messsignal des Tachometers 41 dient als Rückführung im Servokreis. Die Schlittengeschwindigkeit $V_3$ wird solange beibehalten, bis die Hinterkante $51_a$ an der Uebergabestelle 11 angelangt ist, was nach einer Zeitspanne der Fall ist, welche von der Geschwindigkeitsdifferenz $v_1$ - $v_2$ sowie von (c-a) abhängt. Nach diesem Zeitpunkt bewegt sich der Schlitten 8 wieder mit der Geschwindigkeit $v_2$ nach rechts, bis die Lichtschranke 50 den Durchlauf der nächsten Hinterkante 51 meldet.

Die Schlittenbewegungen sollten im Mittel ausgeglichen sein. Dazu ist es erforderlich, dass die Geschwindigkeitsdifferenz $v_1$ - $v_2$ dem durchschnittlichen Abstand der Riegel voneinander auf dem Zufuhrband 1 angepasst wird. Diese Anpassung kann entweder aus den Signalen des Fühlers 50 oder aus der mittleren Stellung des Schlittens 8 abgeleitet und damit die Drehzahl einer der Motoren 18, 19, im dargestellten Ausführungsbeispiel des Motors 19 eingestellt werden. Es ist jedoch auch möglich, die Drehzahl des Motors 19 nur zwischen zwei Werten hin und her zu schalten, z.B. mittels Endschaltern 68, 69, welche durch den Schlitten 32 betätigt werden. Wenn der Schlitten 32 den Endschalter 68 erreicht, wird die Geschwindigkeit $v_2$ auf den höheren Wert geschaltet, so dass der Schlitten 8 sukzessive wieder anch rechts wandert, bis der Schalter 69 betätigt wird und die Geschwindigkeit $v_2$ wieder senkt.

Abweichend von der beschriebenen Wirkungsweise ist es auch möglich, mit einem stationären Fühler die Abstände der Riegel 52 auf dem Band 1 zu erfassen und nach jedem Uebergang eines Riegels 52 über die Uebergabestelle 11 die Schlittengeschwindigkeit dem Abstand zum nächstfolgenden Riegel anzupassen. Diese Variante erfordert einen etwas höheren Rechenaufwand, hat aber den Vorteil, dass die Schlittenbewegungen und -beschleunigungen reduziert werden. Bei dieser Variante ist als zusätzlicher Eingang für den Regler 54 ein Messwert der Stellung des Schlittens 8 oder des Drehwinkels der Zahnscheibe 39 erforderlich. Es kann auch zweckmässig sein, an der Uebergabestelle 11 eine zweite Lichtschranke anzuordnen. Das Signal dieser zweiten Lichtschranke dient in diesem Fall zum Umschalten der Schlittengeschwindigkeit $v_3$ entsprechend dem vorgängig ermittelten und gespeicherten Abstand zu dem auf dem Zufuhrband 1 nächstfolgenden Riegel $52_a$.

Die beschriebene Vorrichtung ermöglicht einen grossen Hub des Schlittens 8 bei gegebener Baulänge und eine grosse Fördergeschwindigkeit. Wegen der Unterstützung der oberen Trums 3, 4 durch die Stützkörper 45 werden Vertikalschwingungen der Bänder 1, 2 auch bei sehr hohen Schlittenbeschleunigungen vermieden, weil die oberen Trums 3, 4 dieser Bänder 1, 2 nicht durchhängen. Bei gegebener Hublänge des Schlittens 8 ist die Vorrichtung erheblich kürzer als bekannte Vorrichtungen zum gleichen Zweck.

Weil die Schokoladeriegel 52 beim Uebergang auf das Band 2 gebremst werden, ist es zweckmässig, das Band 2 mit einer rutschfesten Oberfläche zu versehen, damit der Bremsweg der Riegel 52 auf dem Band 2 kurz ist und wenig streut.

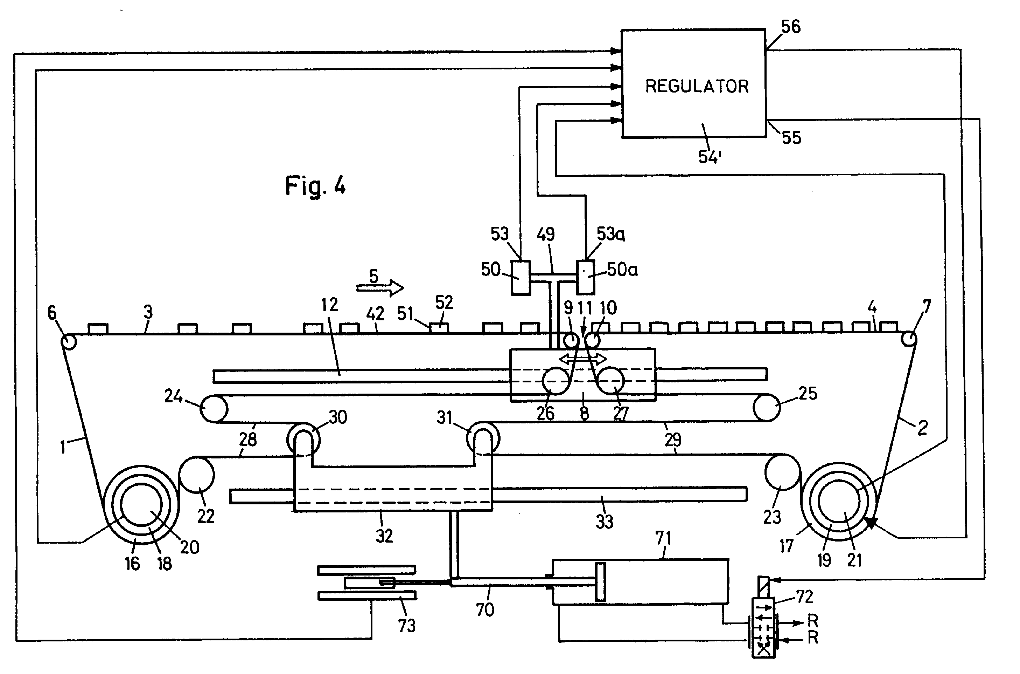

Falls allerdings nur geringe Geschwindigkeiten erforderlich sind, ist die Unterstützung der Bänder 1, 2 nicht nötig. In diesem Fall können der Zahnriemen 44 und die Zahnscheiben 38, 39 weggelassen werden. Fig. 4 zeigt ein solches Ausführungsbeispiel, wobei analoge Teile mit gleichen Bezugszeichen versehen sind, so dass sich eine Beschreibung dieser Teile erübrigt. Der Schlitten 32 ist mit der Kolbenstange 70 eines Hydraulik-Zylinderaggregates 71 verbunden. Der Zylinder 71 wird durch ein Servoventil 72 gesteuert, das seinerseits durch den Regler 54' gesteuert ist. Der Kolbenhub wird durch einen Lineartransducer LDT 73 gemessen. Bei diesem Ausführungsbeispiel ist am Träger 49 eine zweite Lichtschranke 50a über der Uebergabestelle 11 befestigt. Ihr Ausgang 53a liefert ein Signal, wenn die Hinterkante 51 eines Riegels 52 die Uebergabe 11 passiert.

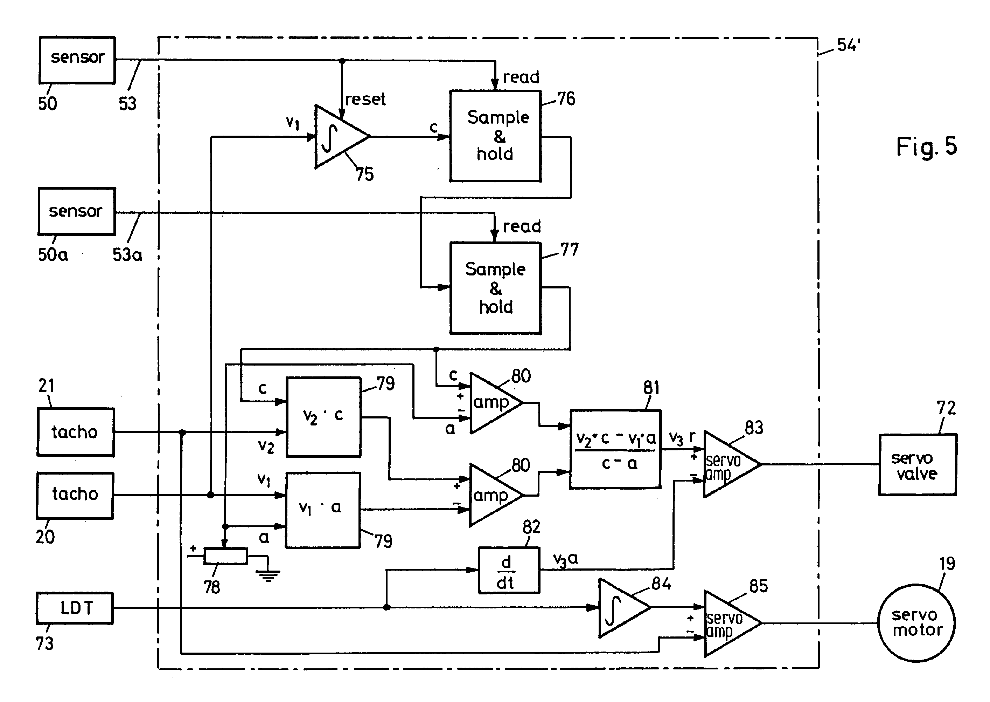

Fig. 5 zeigt eine Ausführungsform des Reglers 54' zur Steuerung des Servoventils 72 und des Servomotors 21. Der Abstand c zwischen aufeinanderfolgenden Riegeln 52 wird durch Integration des Signals des Tachometers 20 zwischen zwei aufeinanderfolgenden Signalen der Lichtschranke 50 mittels eines Integrators 75 ermittelt. Auf ein Signal der Lichtschranke 50 hin wird der Ausgang des Integrators 75 in eine sample&hold-Schaltung 76 eingelesen und der Integrator 75 auf null zurückgestellt. Der Ausgang der Schaltung 76 wird auf ein Signal der Lichtschranke 50a hin in eine zweite sample&hold-Schaltung 77 eingelesen. Der Ausgang der Schaltung 77 entspricht dem Abstand c zwischen der Hinterkante 51a des sich auf dem Band 1 auf die Uebergabestelle 11 zu bewegenden Riegels 52a und der Hinterkante 51b des nächstvorderen Riegels 52b zum Zeitpunkt, wo dieser die Uebergabestelle 11 gerade verlässt. Der gewünschte Abstand a der Riegel 52 auf dem Band 2 wird an einem Potentiometer 78 eingestellt. Zwei Multiplikatoren 79, zwei Differenzverstärker 80 und ein Dividierglied 81 führen die in diesem Glied 81 eingetragene Gleichung durch und ermitteln damit den Sollwert $v_{3r}$ der Schlittengeschwindigkeit. Der Istwert $v_{3a}$ wird durch Differenzieren des Signals des Transducers 73 mittels eines Differentiators 82 ermittelt. Diese beiden Geschwindigkeiten werden in einem Servoverstärker 83 subtrahiert, welcher das Servoventil 72 treibt.

Das Positionssignal des Transducers 73 wird mit einem Integrator 84 mit grosser Zeitkonstante integriert. Der Ausgang des Integrators 84 entspricht dem Mittelwert der Stellung der beiden Schlitten 8, 32. Dieser Ausgang ist der Sollwerteingang eines weiteren Servoverstärkers 85, der den Servomotor 19 treibt. Die Istwertrückführung zum Verstärker 85 ist das Signal des Tachometers 21. Der Integrator 84 regelt die Geschwindigkeit des Abfuhrförderbandes 2 in Abhängigkeit des durchschnittlichen Abstandes c zwischen den Riegeln 52 auf dem Zufuhrband 1, derart, dass sich die beiden Schlitten 8, 32 um ihre Mittelstellung herum hin und her bewegen.

Die zweite Lichtschranke 50a kann auch weggelassen werden. In diesem Fall wird das Einlesesignal für die Schaltung 77 über ein Totzeitglied vom Signal der Lichtschranke 50 abgeleitet. Die Totzeit ist umgekehrt proportional zur Bandgeschwindigkeit $v_1$.

In Fig. 5 ist der Regler 54' mit einer Analogschaltung dargestellt. Dieselbe Funktion kann jedoch auch mit einer digitalen Schaltung durchgeführt werden.

Der Regler 54' nach Fig. 5 eignet sich auch für die Ausführungsform nach Fig. 1. In diesem Fall werden der Transducer 73 und der Differentiator 82 ersetzt durch das Tachometer 41, der Integrator 84 führt eine doppelte Integration durch und der Servoverstärker 83 treibt den Servomotor 40.

## Patentansprüche

1. Vorrichtung zur Bildung einer Kolonne von Stückgütern, insbesondere von Schokoladeriegeln, umfassend ein mit einer ersten Geschwindigkeit ($v_1$) Stetig umlaufendes Zufuhrband (1), auf dem die in Transportrichtung (5) einzeln hintereinander liegenden Stückgüter (52) ankommen, ein sich unmittelbar an das stromabwärtige Ende des Zufuhrbandes (1) anschliessendes, mit einer zweiten Geschwindigkeit ($v_2$) stetig umlaufendes Abfuhrband (2), welches die Stückgüter (52) vom Zufuhrband (1) übernimmt und einer Weiterbearbeitungsstelle zuführt, einen in Transportrichtung (5) hin und her bewegbaren ersten Schlitten (8), der je ein Bandumlenkelement (9,10) für die beiden Bänder (1,2) trägt, wobei die beiden Bankumlenkelemente (9,10) die Uebergabestelle (11) zwischen den beiden Bändern (1,2) bilden, je eine an den Enden der Gesamtförderstrecke ortsfest gelagerte Bandrolle (6,7), über welche das betreffende Band (1,2) geführt ist, einen in Transportrichtung entgegen der Bewegungsrichtung des ersten Schlittens (8) hin und her bewegbaren zweiten Schlitten (32), der je eine Umlenkrolle (30,31) für die beiden Bänder (1,2) trägt, einen in beiden Richtungen wirkenden Servoantrieb (40,71,72), dessen Abtriebsglied mit mindestens ei-

4

nem der beiden Schlitten verbunden ist, einen Regler (54), der den Servoantrieb (40,71,72) treibt sowie einen Fühler (50) stromaufwärts der Uebergabestelle (11), der mit dem Regler (54) verbunden ist und die Stückgüter (52) stromaufwärts der Uebergabestelle (11) abtastet.

2. Vorrichtung nach Anspruch 1, wobei der Fühler (50) am ersten Schlitten (8) befestigt ist.

3. Vorrichtung nach Anspruch 1 oder 2, wobei der Servoantrieb (40, 71, 72) zusätzlich in Abhängigkeit der Geschwindigkeiten des Zufuhr- und des Abfuhrbandes (1, 2) geregelt ist.

4. Vorrichtung nach einem der Ansprüche 1 bis 3, wobei die Geschwindigkeitsdifferenz zwischen Zufuhrband (1) und Abfuhrband (2) abhängig vom durchschnittlichen Abstand der Stückgüter (52) auf dem Zufuhrband (1) einstellbar ist.

5. Vorrichtung nach einem der Ansprüche bis 4, wobei der erste Schlitten (8) am oberen Trum (42) eines um zwei ortsfest gelagerte Scheiben (38,39) umlaufenden, biegsamen Zugelementes (44) befestigt ist.

6. Vorrichtung nach Anspruch 5, wobei am Zugelement (44) in Abständen voneinander Stützelemente (45) angebracht sind, auf welchen die oberen Trums (3, 4) vom Zufuhr- und Abfuhrband (1,2) abgestützt sind, wobei die Stützelemente (45) vorzugsweise aus Kunststoff, insbesondere aus Polyamid bestehen.

7. Vorrichtung nach Anspruch 5 oder 6, wobei die eine Scheibe (38) benachbart dem stromaufwärtigen Ende des oberen Trums (3) des Zufuhrbandes (1) und die andere Scheibe (39) benachbart dem stromabwärtigen Ende des oberen Trums (4) des Abfuhrbandes (2) angeordnet ist.

8. Vorrichtung nach einem der Ansprüche 5 bis 7, wobei das Zugelement (44) ein Zahnriemen ist.

9. Vorrichtung nach einem der Ansprüche 1 bis 8, wobei das Zufuhr- und Abfuhrband (1, 2) je aus zwei parallel im Abstand voneinander angeordneten Transportbändern (60) besteht.

10. Vorrichtung nach den Ansprüchen 6 und 9, wobei die Stützelemente (45) im Bereich zwischen den Transportbändern (60) eine Ausnehmung (61) aufweisen.

**Claims**

1. Apparatus for forming a column of articles, in particular chocolate bars, comprising a feed belt (1) which continuously revolves at a first speed ($v_1$) and on which the articles (52) lying individually one behind the other in transport direction (5) arrive, a delivery belt (2) directly adjoining the downstream end of the feed belt (1) and continuously revolving at a second speed ($v_2$) which takes over the articles (52) from the feed belt (1) and delivers them to a further processing point, a first slide (8) which is reciprocable in transport direction (5) and carries one belt guide element (9, 10) for each of the two belts (1, 2), the two belt guide elements (9, 10) forming the transfer point (11) between the two belts (1, 2), conveyor drums (6, 7) which are supported in a stationary manner one at either end of the total conveying track and over which the relevant belt (1, 2) is guided, a second slide (32) which is reciprocable in transport direction counter to the direction of movement of the first slide (8) and carries one guide pulley (30, 31) for each of the two belts (1, 2), a servo drive (40, 71, 72) which operates in both directions and whose output member is connected to at least one of the two slides, a regulator (54) which operates the servo drive (40, 71, 72), as well as a sensor (50) which is disposed upstream of the transfer point (11), is connected to the regulator (54) and samples the articles (52) upstream of the transfer point (11).

2. Apparatus according to claim 1, wherein the sensor (50) is fastened to the first slide (8).

3. Apparatus according to claim 1 or 2, wherein the servo drive (40, 71, 72) is additionally regulated in dependence upon the speeds of the feed and delivery belts (1, 2).

4. Apparatus according to one of claims 1 to 3, wherein the speed difference between the feed belt (1) and delivery belt (2) is adjustable in dependence upon the average spacing of the articles (52) on the feed belt (1).

5. Apparatus according to one of claims 1 to 4, wherein the first slide (8) is fastened to the top strand (42) of a flexible traction element (44) which revolves around two sheaves (38, 39) supported in a stationary manner.

6. Apparatus according to claim 5, wherein there are, mounted on the traction element (44) at a distance from one another, support elements (45) on which the top strands (3, 4) of the feed and delivery belts (1, 2) are supported, said support elements (45) preferably being made of plastic, in particular of polyamide.

7. Apparatus according to claim 5 or 6, wherein one sheave (38) is disposed adjacent to the upstream end of the top strand (3) of the feed belt (1) and the other sheave (39) is disposed adjacent to the downstream end of the top strand (4) of the delivery belt (2).

8. Apparatus according to one of claims 5 to 7, wherein the traction element (44) is a toothed belt.

9. Apparatus according to one of claims 1 to 8, wherein the feed and delivery belts (1, 2) each comprise two conveyor belts (60) which are disposed parallel to and at a distance from one another.

10. Apparatus according to claims 6 and 9, wherein the support elements (45) have a recess (61) in the region between the conveyor belts (60).

**Revendications**

1. Dispositif pour former une colonne de produits unitaires, notamment de barres de chocolat, comprenant une bande transporteuse d'alimentation (1), circulant en permanence à une première vitesse ($v_1$) et sur laquelle arrivent les produits unitaires (52) se succédant individuellement dans la direction de transport (5), une bande transporteuse d'évacuation (2), circulant en permanence à une seconde vitesse ($v_2$), se raccordant directement à l'extrémité aval de la bande transporteuse d'alimentation (1) et prenant en charge les produits unitaires (52) de la bande transporteuse d'alimentation (1) pour les amener à un poste de traitement ultérieur, un premier coulisseau (8), mobile en va-et-vient dans la direction de transport (5) et portant un élément de renvoi de bande respectif (9, 10) pour les deux bandes transporteuses (1, 2), les deux éléments de renvoi de bande (9, 10) constituant le point de transfert (11) entre les deux bandes transporteuses (1, 2), une poulie de bande transporteuse respective (6, 7), montée stationnairement à chaque extrémité du parcours de transport total et par laquelle passe la bande transporteuse (1, 2) concernée, un second coulisseau (32), mobile en va-et-vient dans la direction de transport à l'encontre de la direction de déplacement du premier coulisseau (8) et portant une poulie de renvoi respective (30, 31) pour les deux bandes transporteuses (1, 2), un servoentraînement (40, 71, 72), agissant dans les deux directions et dont l'organe de sortie est relié à au moins un des deux coulisseaux, un régulateur (54), qui entraîne le servoentraînement (40, 71, 72), ainsi qu'un capteur (50), qui est relié au régulateur (54) et détecte les produits unitaires (52) en amont du point de transfert (11).

2. Dispositif selon la revendication 1, dans lequel le capteur (50) est fixé sur le premier coulisseau (8).

3. Dispositif selon la revendication 1 ou 2, dans lequel le servoentraînement (40, 71, 72) est en outre régulé en fonction des vitesses de la bande transporteuse d'alimentation et de la bande transporteuse d'évacuation (1, 2).

4. Dispositif selon l'une quelconque des revendications 1 à 3, dans lequel la différence de vitesses entre la bande transporteuse d'alimentation (1) et la bande transporteuse d'évacuation (2) peut être réglée en fonction de la distance moyenne entre les produits unitaires (52) sur la bande transporteuse d'alimentation (1).

5. Dispositif selon l'une quelconque des revendications 1 à 4, dans lequel le premier coulisseau (8) est fixé sur le tronçon supérieur (42) d'un élément de traction flexible (44), circulant autour de deux disques (38, 39) montés stationnairement.

6. Dispositif selon la revendication 5, dans lequel des éléments de soutien (45) sont disposés à distance les uns des autres sur l'élément de traction (44), éléments sur lesquels sont soutenus les tronçons supérieurs (3, 4) de la bande transporteuse d'alimentation et de la bande transporteuse d'évacuation (1, 2), les éléments de soutien (45) étant de préférence réalisés en matière plastique, notamment en polyamide.

7. Dispositif selon la revendication 5 ou 6, dans lequel le premier disque (38) est disposé au voisinage de l'extrémité amont du tronçon supérieur (3) de la bande transporteuse d'alimentation (1), et l'autre disque (39) au voisinage de l'extrémité aval du tronçon supérieur (4) de la bande transporteuse d'évacuation (2).

8. Dispositif selon l'une quelconque des revendications 5 à 7, dans lequel l'élément de traction (44) est une courroie dentée.

9. Dispositif selon l'une quelconque des revendications 1 à 8, dans lequel la bande transporteuse d'alimentation et la bande transporteuse d'évacuation (1, 2) sont chacune constituées de deux bandes transporteuses (60) disposées à distance l'une de l'autre.

10. Dispositif selon les revendications 6 et 9, dans lequel les éléments de soutien (45) présentent un évidement (61) dans la région située entre les bandes transporteuses (60).

Fig. 1

REGULATOR

## Fig. 2

## Fig. 3

Fig. 4

REGULATOR

Fig. 5